# EUROPEAN PATENT SPECIFICATION

(11) **EP 3 820 272 B1**
(45) Date of publication and mention of the grant of the patent: **30.04.2025**
(21) Application number: 19734045.8
(22) Date of filing: 25.06.2019
(51) Int. Cl.: A01D 34/00, A01D 34/73

(54) **ROBOTIC LAWNMOWER CUTTING ARRANGEMENT, ROBOTIC LAWNMOWER, CUTTING BLADE, AND METHODS**
ROBOTER-RASENMÄHER-SCHNEIDANORDNUNG, ROBOTER-RASENMÄHER, SCHNEIDMESSER UND VERFAHREN
AGENCEMENT DE COUPE DE TONDEUSE À GAZON ROBOT, TONDEUSE À GAZON ROBOT, LAME DE COUPE ET PROCÉDÉS

(30) Priority: 12.07.2018 SE 1850895
(43) Date of publication of application: 19.05.2021
(73) Proprietor: HUSQVARNA AB, 561 82 Huskvarna (SE)
(72) Inventor: AGERHALL, Jonas, 562 41 TABERG (SE)
(86) International application number: PCT/EP2019/066787
(87) International publication number: WO 2020/011524

(56) References cited:
- EP-A1- 3 342 268
- WO-A1-2016/197125
- GB-A- 2 311 453
- US-A1- 2017 215 337
- US-A1- 2017 367 257

## Description

### Field of the invention

The present invention relates to various aspects of a robotic lawnmower cutting arrangement to be carried by a robotic lawnmower.

### Background

Robotic lawnmowers, used for garden or lawn maintenance, are well known in the art. Typically, a robotic mower includes multiple cutting blades detachably connected to a rotating blade carrier disc, acting as blade or knife holder. The blade carrier, usually a circular disc, is arranged to rotate about a vertical axis, perpendicular to the grass surface, and is powered by an electric motor of the robotic lawnmower to rotate the cutting blades.

Generally, during cutting the robotic lawnmower uses energy for cutting grass, and to propel itself across the lawn. In a battery powered electric robotic lawnmower, the robotic lawnmower has to return to its charging station after its energy resources have been consumed. Besides performing the actual grass cutting, the robotic lawnmower also consumes energy through its control logic, sensors and communication system. Even the return trip to the charging station to recharge batteries contributes to energy being spent. Typical robotic lawnmowers navigate randomly, and thereby operate on already-cut grass multiple times. For some robotic mowers, several cuts on each particular area may anyhow be required before the desired cutting quality is reached, including aesthetical evenness of the grass surface.

Battery powered robotic mowers are limited by their battery capacity and energy efficiency for cutting grass. Energy efficiency depends on the power train efficiency of its electronic control logic, electric motors, wheels, transmission and cutting efficiency, besides environmental conditions such as grass properties, ground properties, obstacles, and proper maintenance of the robotic lawnmower. To cut grass at a high cutting height of the grass blades usually requires less energy than cutting deeper into the grass, with short cut grass length as a result. As a consequence, cutting very short grass is more challenging and energy demanding than cutting grass at a higher cutting height. GB 2 311 453 A suggests a simple means of changing the cutting height of a hover mower, by repositioning the cutting blades on the upper or lower face of a substantially cone-shaped blade carrier disc. Another issue of some of today's robotic lawnmowers is a tendency to get stuck, for example by beaching on bumps in uneven terrain. When this happens, energy such as battery power is also spent when the robotic lawnmower is trying to free itself. EP0808096 B1 suggests the use of a free-rotating shielding lower plate between the grass surface and the rotating blade carrier disc. In order to save energy, the blade carrier disc's rotation axis has a forward inclination of 7 degrees, such that the cutting blades will not touch again the grass at the rear of the cutting head. There is however still a need for a robotic lawnmower which is capable of covering a larger area, and/or provides improved cutting result, and/or is less prone to get stuck on terrain features.

### Summary

It is an object of the present invention to solve, or at least mitigate, parts or all of the above mentioned problems. To this end there is, according to a first aspect, provided a robotic lawnmower cutting arrangement according to claim 1. Such a robotic lawnmower cutting arrangement allows raising the blade carrier above the grass, which reduces friction against the grass and thereby reduces power consumption. Such a friction reduction may be obtained with a cutting arrangement which is free from, i.e. not provided with, a free-rotating lower plate, such as that of EP0808096B1, between the grass surface and the rotating blade carrier. At the same time, the blade design permits cutting the grass to a low cutting height. In particular, compared to the cutting arrangement of EP0808096B1, the friction between the lower plate and the grass may be avoided. The increased ground clearance thereby obtainable may also reduce the risk of getting stuck. The expression "axially, with respect to the carrier rotations axis, offset" is to be construed as offset in the direction of the carrier rotation axis. The blade pivot axis may be offset from the blade carrier rotation axis by a pivot axis radial offset defined as the radial distance from the blade carrier rotation axis to the point where the pivot axis passes through a plane, which plane passes through the blade carrier interface, and which plane is perpendicular to the blade carrier rotation axis. According to an embodiment, the cutting portion and the blade carrier interface may be interconnected by an offset portion extending in a direction transversal to a plane defined by the cutting portion. Preferably, the cutting arrangement is configured to be oriented, when in use, such that the cutting plane is below the blade carrier interface rotation plane.

Preferred embodiments of the invention are provided in the dependent claims.

### Brief description of the drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
Fig. 1 is a view in perspective of a robotic lawnmower system;
Fig. 2 is a block diagram illustrating functional blocks of a robotic lawnmower;
Fig. 3 is a side view in section of a robotic lawnmower cutting arrangement, and illustrates three different configurations of a pivotal attachment of a cutting blade to a blade carrier;
Fig. 4A illustrates a section of a cutting blade and blade fastener assembly of the robotic lawnmower cutting arrangement of Fig. 3;
Fig. 4B is a perspective view of the cutting blade of Fig. 4A;
Fig. 4C is a top view of the cutting blade of Fig. 4A;
Fig. 5 is a top view of the robotic lawnmower cutting arrangement of Fig. 3 when in operation;
Fig. 6 is a side view in section of the robotic lawnmower cutting arrangement of Fig. 3 when mowing a lawn;
Fig. 7 is a side view in section of the robotic lawnmower cutting arrangement of Fig. 3, with and without axial and radial play of the cutting blade relative to the blade pivot axis;
Fig. 8 is a side view in section of an alternative embodiment of a robotic lawnmower cutting arrangement;
Fig. 9 is a side view in section of yet an alternative embodiment of a robotic lawnmower cutting arrangement;
Fig. 10 is a side view in section of still another alternative embodiment of a robotic lawnmower cutting arrangement;
Fig. 11 is a perspective view of an alternative embodiment of a cutting blade;
Fig. 12 is a perspective view of yet an alternative embodiment of a cutting blade;
Fig. 13 is a perspective view of yet an alternative embodiment of a cutting blade; and
Fig. 14 is a flow chart illustrating two alternative methods of manufacturing a robotic lawnmower cutting blade.

All the figures are schematic, not necessarily to scale, and generally only show parts which are necessary in order to elucidate the embodiments, wherein other parts may be omitted.

### Detailed description of the exemplary embodiments

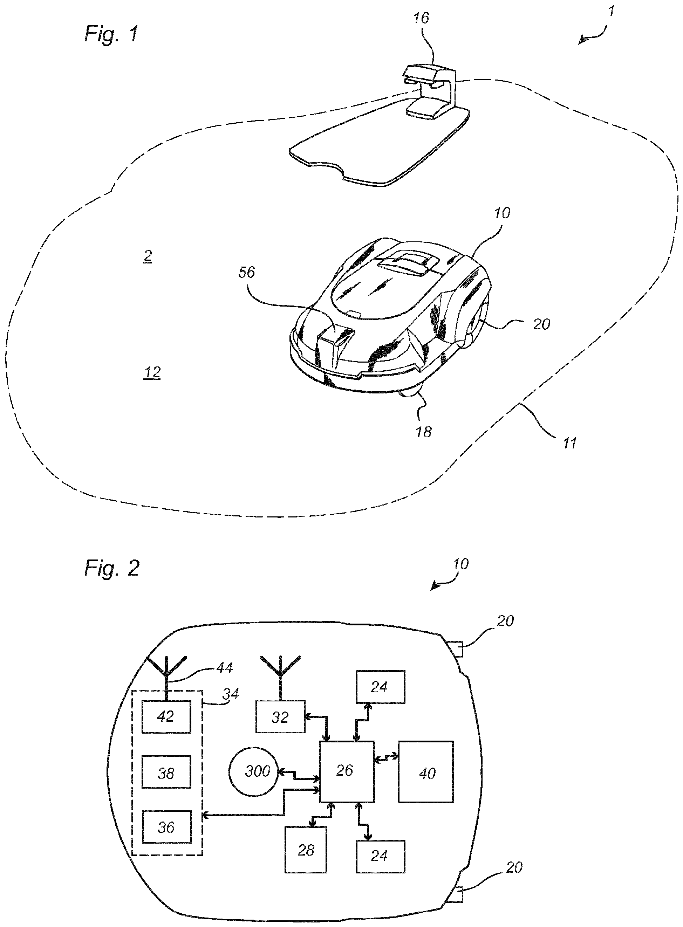

Fig. 1 schematically illustrates an overview of a robotic lawnmower system 1 configured to mow a lawn 2 within a predefined work area 12 delimited by a boundary wire 11 emitting a magnetic field in the manner known in the art. The robotic lawnmower system 1 comprises a self-propelled robotic lawnmower 10 and a charging station 16. The robotic lawnmower is provided with wheels, such as a pair of front wheels 18 and a pair of rear wheels 20, for moving within the work area 12. Typically, at least one of the wheels 18, 20 is connected to a motor, such an electric motor, either directly or via a transmission (not illustrated), for propelling the robotic lawnmower 10 across the lawn 2.

Fig. 2 illustrates functional blocks of the robotic lawnmower 10. In the example of Fig. 2, each of the rear wheels 20 is connected to a respective electric propulsion motor 24. This allows for driving the rear wheels 20 independently of one another, enabling e.g. sharp turning of the robotic lawnmower 10. The robotic lawnmower 10 further comprises a controller 26. The controller 26 may be connected to sensors, actuators, and communication interfaces of various kinds, and may be implemented using a central processing unit executing instructions stored on a memory 28. Needless to say, different combinations of general and application-specific integrated circuits may be used as well as different memory technologies. In general, the controller 26 is configured to read instructions from the memory 28 and execute these instructions possibly in view of different sensor signals to control the operation of the robotic lawnmower 10. Typically, the controller 26 is configured to, based on the instructions, control the robotic lawnmower in an autonomous or semi-autonomous manner, i.e. with no, or only occasional, instructions from a human operator. The controller 26 also controls the operation of a cutter motor 300, which is configured to drive a cutting arrangement comprising a blade carrier holding a set of cutting blades in a manner which will be elucidated further below.

A wireless data transceiver 32 is connected to the controller 26, and allows the controller 26 to communicate with the charging station 16 or any other device, such as a remote control or a smart phone (not shown).

The robotic lawnmower 10 further comprises a navigation system 34. In the illustrated example, the navigation system 34 comprises an inertial navigation device 36, such as an accelerometer or a gyroscope, and a magnetic field sensor 38 configured to detect a magnetic field emitted by the boundary wire 11 (Fig 1) on/in the ground. A boundary wire may be used for defining the boundaries of the area 12 to be treated, or to otherwise provide a reference to assist the robotic lawnmower 10 to navigate. The inertial navigation device 36 allows the robotic lawnmower 10 to keep track of its movement within the area 12 to be treated. The inertial navigation device 36 may be supplemented by a compass (not shown), to provide basic orientation information that may compensate for any drift of the inertial navigation device 36.

The controller 26 also controls the propulsion motors 24, thereby controlling the propulsion of the robotic lawnmower 10 within the area 12 to be treated. The propulsion motors 24 may be stepper motors, allowing the controller 26 to keep track of the respective numbers of turns of the motors 24, and thereby also the distance travelled by the robotic lawnmower 10, as well as any turning angle of the robotic lawnmower 10 when the motors 24 are operated at different speeds or in reverse directions. In this respect, the propulsion motors 24 may operate as odometers. Alternatively, the wheels 20 may be provided with odometer indexers configured to provide feedback to the controller 26 as regards the number of turns of each motor 24. The navigation system 34 further comprises a GNSS (Global Navigation Satellite System) receiver 42 Navigation information from the navigation system 34 and the motors 24 is fused in the controller 26 to provide an accurate position indication, in order to enable e.g. a systematic movement pattern of the robotic lawnmower 10, wherein the robotic lawnmower 10 traverses the lawn 2 along parallel, adjacent mowing tracks.

The controller 26, navigation system 34, transceiver 32, and electric motors 24, 30 are powered by a battery 40. The robotic lawnmower 10 is configured to navigate to the charging station 16 on a regular basis, and/or whenever the battery charge is running low, in order to dock with the charging station 16 for recharging the battery 40. The charging station 16 may be connected to receive power from the electric power grid.

Battery powered robotic mowers are limited by their battery capacity and energy efficiency for cutting grass. If energy consumption can be reduced, cutting coverage, cutting quality and cutting speed can be gained, while reducing wear and tear of the robotic mower machinery.

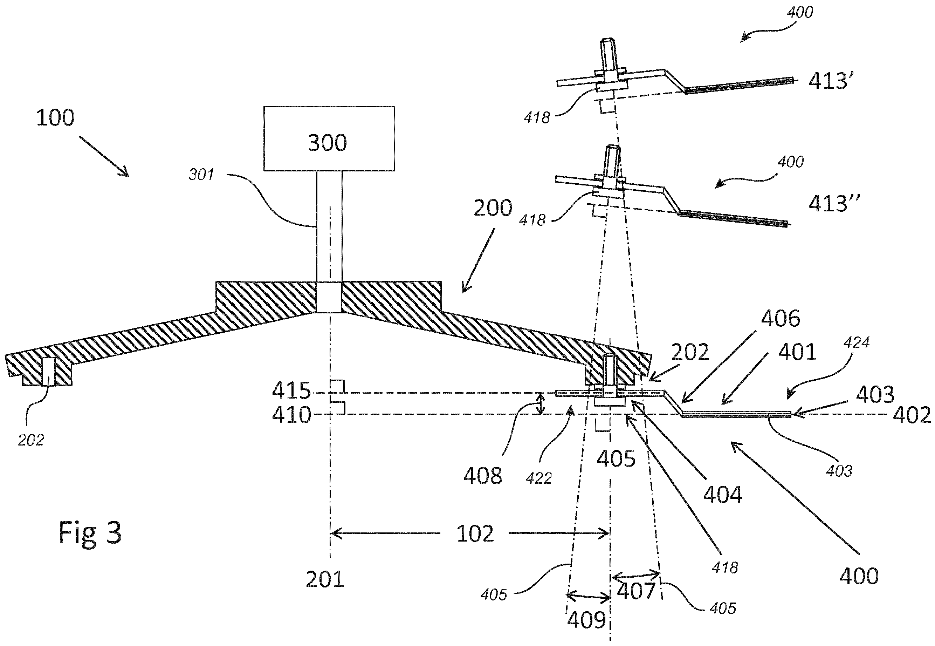

Fig. 3 shows an example of a robotic lawnmower cutting arrangement 100 of the robotic lawnmower 10 of Figs 1-2. The robotic lawnmower cutting arrangement 100 comprises a blade carrier 200 configured to be rotated by the cutting motor 300, via a cutting motor shaft 301, about a vertical blade carrier rotation axis 201. The blade carrier 300 may be configured as an injection-molded plastic component. The blade carrier 200 may be rotation symmetric and, in the illustrated example, has a circular shape as seen along the blade carrier rotation axis 201, which circular shape is concentric with the blade carrier rotation axis 201. The blade carrier 200 comprises a set of blade attachment interfaces 202 radially offset from the blade carrier rotation axis 201, each blade attachment interface 202 being configured to pivotally hold a respective cutting blade. In the illustration of Fig. 3, for clarity of illustration, only one of the blade attachment interfaces 202 is connected to a respective cutting blade 400.

The cutting blade 400 comprises, at a distal 424 end thereof, a substantially flat cutting portion 401 extending along a cutting portion plane 410 which is horizontal, i.e. parallel to the surface of the lawn to be cut. The cutting portion 401 is provided with a cutting edge 403 facing in a tangential direction with respect to the blade carrier rotation axis 201. A blade carrier interface 404 is arranged at a proximal end 422 of the cutting blade 400. The blade carrier interface 404 pivotally connects the cutting blade 400 to the blade attachment interface 202 of the blade carrier 200 via a cutting blade attachment screw 418, which operates as a pivot pin and thereby defines the blade pivot axis 405. The blade pivot axis 405 may be vertical, as is illustrated by the blade 400 attached to the blade carrier 200. According to other embodiments, however, the blade pivot axis 405 may be inclined radially inwards by an inwards inclination angle 407, or radially outwards by an outwards inclination angle 409, as is illustrated by the alternative positions 413', 413" of the cutting blade 400 and cutting blade attachment screw 418 relative to respective blade pivot axes 405', 405". The blade pivot axis 405 is radially separated from the blade carrier rotation axis 201 by a pivot axis radial offset 102, defined as the radial distance from the blade carrier rotation axis 201 to the point where the pivot axis 405 passes through a plane 415, which plane 415 passes through the blade carrier interface 404, and which plane 415 is perpendicular to the blade carrier rotation axis 201. A typical pivot axis radial offset 102may be between 50 and 500 mm; and more typically, between 100 and 300 mm.

Between the cutting portion 401 and the blade carrier interface 404, the cutting blade 400 has an offset portion 406 which extends in a direction transversal to the cutting portion plane 410, and thereby defines an axial, with respect to the blade carrier rotation axis 201 as well as the blade pivot axis 405, cutting plane offset 408 between the cutting portion 401 and the blade carrier interface 404. The cutting plane offset distance 408 may be, by way of example, about 15 mm.

When operating the robotic lawnmower cutting arrangement 100, the blade carrier 200 is rotated about the blade carrier rotation axis 201 such that the blade 400 orbits the blade carrier rotation axis 201. Thereby, the blade carrier interface 404 of the cutting blade 400 follows a circular path in a blade carrier interface rotation plane 415 perpendicular to the blade carrier rotation axis 201, and the cutting portion 401 follows a circular path in a cutting plane 402, which planes 402, 415 are vertically offset from each other by the cutting plane offset distance 408.

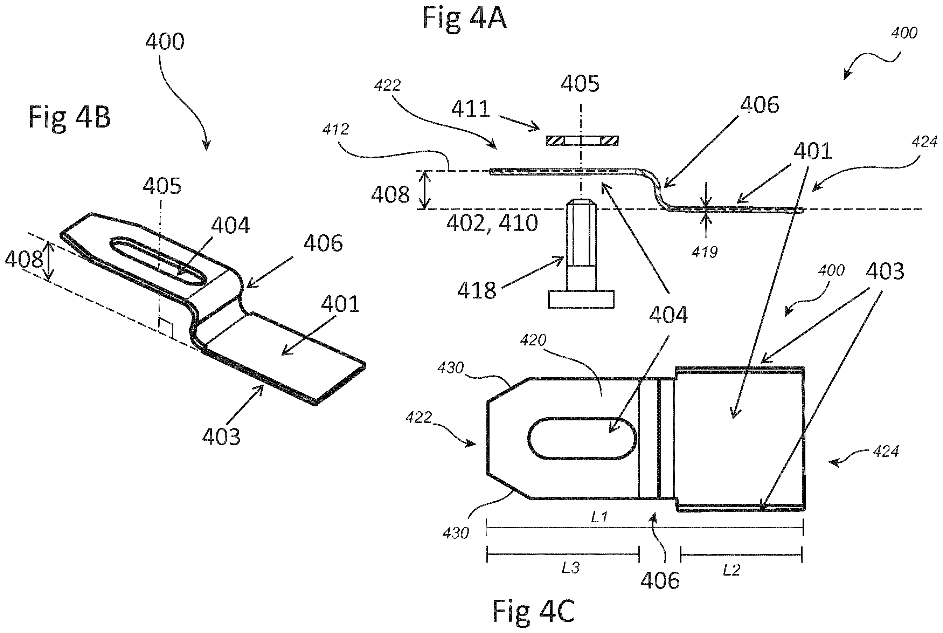

Figs 4A, 4B and 4C illustrate the cutting blade 400 in greater detail, wherein the section of Fig. 4A also provides an exploded view of a fastener assembly for attaching the cutting blade 400 to the blade carrier 200. Starting with the section view of Fig. 4A, the cutting blade 400 is integrally formed of steel sheet. The thickness 419 of the steel sheet may be, for example, somewhat less than 1 mm. The proximal end 422 with the blade carrier interface 404 is integrally formed with the rest of the blade 400, and the blade carrier interface 404 extends in a blade carrier interface plane 412 coinciding with the blade carrier interface rotation plane 415. Thereby, the blade carrier interface plane 412 is parallel to the cutting plane 402 as well as the cutting portion plane 410. The fastener assembly comprises a cutting blade attachment screw 418 configured to penetrate the blade carrier attachment interface 404 and be secured in the blade attachment interface 202 of the blade carrier 200 (Fig. 3), and a washer 411 configured to be positioned between the cutting blade 400 and the blade carrier 200 (Fig. 3). The washer 411 is operative to reduce the friction in the pivotal engagement between the cutting blade 400 and the blade carrier 200. The blade attachment screw 418 is configured to, when secured to the blade carrier 200, offer the blade carrier interface 404 a slight axial play, such that the cutting blade 400 can pivot in, and slide along, the blade carrier interface rotation plane 415.

As is illustrated in Fig. 4B, the blade carrier interface 404 is configured as an elongate through-hole. The elongate shape of the through-hole 404 offers the engagement between the blade carrier interface 404 and the blade attachment interface 202 (Fig. 3) a radial play, with respect to the blade pivot axis 405, corresponding to the length of the elongate through-hole along the carrier interface rotation plane 415, minus the diameter of the blade attachment screw 418. A typical radial play may be, for example, of the order 10-50 mm.

Turning now to Fig. 4C, the cutting blade 400 comprises a pair of straight cutting edges 403, which extend along opposite side edges of the cutting blade 400. Each of the edges 403 faces in a respective tangential direction, relative to the blade carrier rotation axis 201. The cutting blade 400 is elongate, with its direction of elongation extending from the proximal end 422 to the distal end 424, and has a cutting blade length L1 along its direction of elongation. The cutting portion 401 has a cutting portion length L2 along said direction of elongation of about half the cutting blade length L1. The blade carrier interface portion 422, extending in the blade carrier interface plane 412 (Fig. 4A), has a blade carrier interface portion length L3 along said direction of elongation, which is also about half the cutting blade length L1. The proximal end 420 of the cutting blade has a pair of chamfers 430, which facilitate the cutting blade's 400 pivoting motion about the blade pivot axis 405 (Fig. 4B.

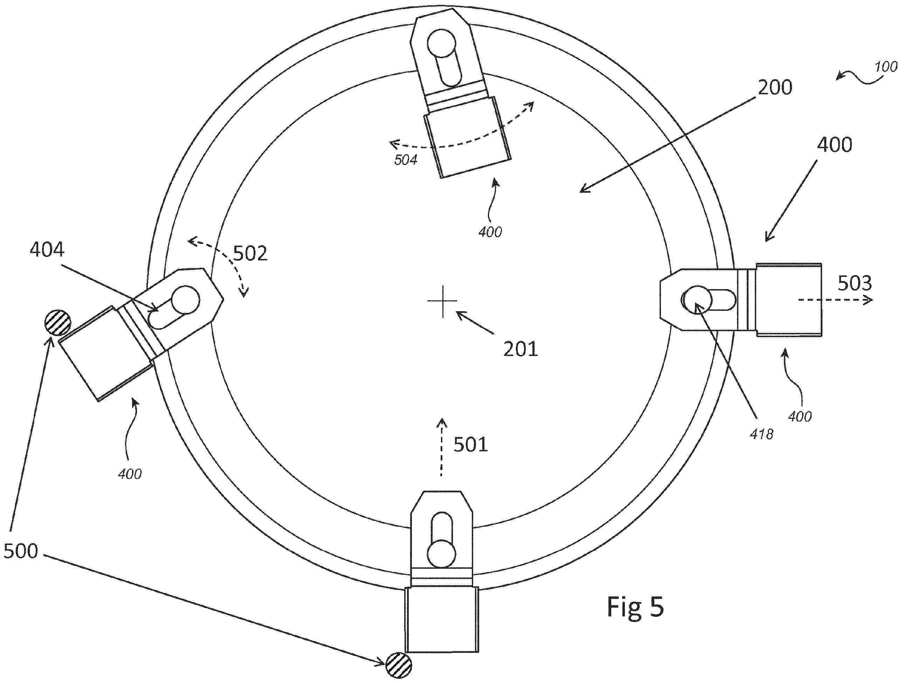

Fig. 5 illustrates the robotic lawnmower cutting arrangement 100 in operation, and as seen from below, illustrating four cutting blades 400 pivotally attached to the blade carrier 200. The freedom of each blade 400 to pivot about a respective pivot axis 405 (Fig. 4B), and the radial play of the cutting blade 400 in relation to its respective blade pivot axis 405 (Fig. 4B), allow the cutting blade 400 to freely rotate 504 about the pivot axis 405 (Fig. 3), move radially outwards 503 from the blade carrier rotation axis 201 in response to centrifugal forces, move radially inwards 501 towards the blade carrier rotation axis 201 in response to a collision with an uncuttable object 500, and also to pivot 502 about the pivot axis 405 in response to a collision with an uncuttable object 500. Referring back to Fig. 2, the controller 26 may be configured to operate the cutting motor 300 below a limit RPM adapted to give each respective cutting portion 401 a maximum impact energy of less than 2 joules, thereby resulting in a robotic lawnmower cutting arrangement which is relatively safe to people. For such a situation, it may be sufficient that the cutting motor 300 be operated at an output power of less than 20 watt.

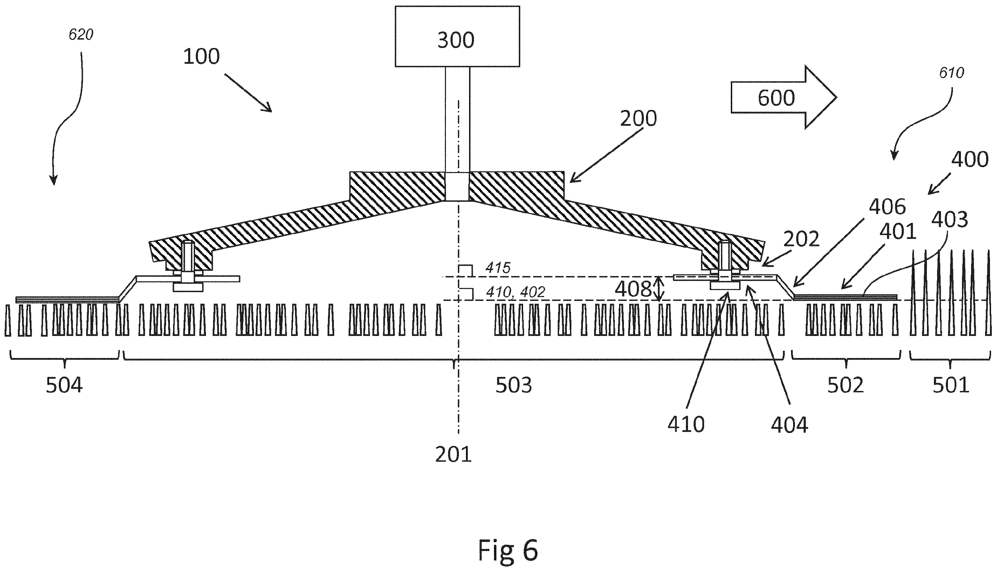

Fig. 6 illustrates the robotic lawnmower cutting arrangement 100 in operation, and as seen from the side, illustrating two of the four cutting blades 400 of Fig. 5. While moving in a forward direction 600 across the lawn, the robotic lawnmower cutting arrangement 100 is rotated about the blade carrier rotation axis 201 by the cutting motor 300. Grass blades 501 entering the front end 610 of the robotic lawnmower cutting arrangement 100 will be cut from the side, in a tangential direction relative to the blade carrier rotation axis 201. When passing the trailing end 620 of the robotic lawnmower cutting arrangement 100, any remaining, un-cut grass blades will be given a second chance to be cut at the same cutting height. When passing the trailing end 620, the grass blades 501 will again be cut from the side, in an opposite tangential direction, thus leaving an even quality cut lawn after just one passage of the robotic lawnmower cutting arrangement 100. The non-cutting parts 404, 406 of the cutting blade 400 will rotate at a distance above the cut grass 503, minimizing friction against the grass.

As is apparent from Fig. 6, the robotic lawnmower 10 (Fig. 1) is operated by rotating each blade carrier interface 404 about the blade carrier rotation axis 201 in the blade carrier interface rotation plane 415; and rotating the cutting portions 401, with the cutting edges 403 facing in the tangential direction of travel of the cutting blade 400, wherein the cutting edges 403 are rotated in the cutting plane 402 below the blade carrier interface rotation plane 415.

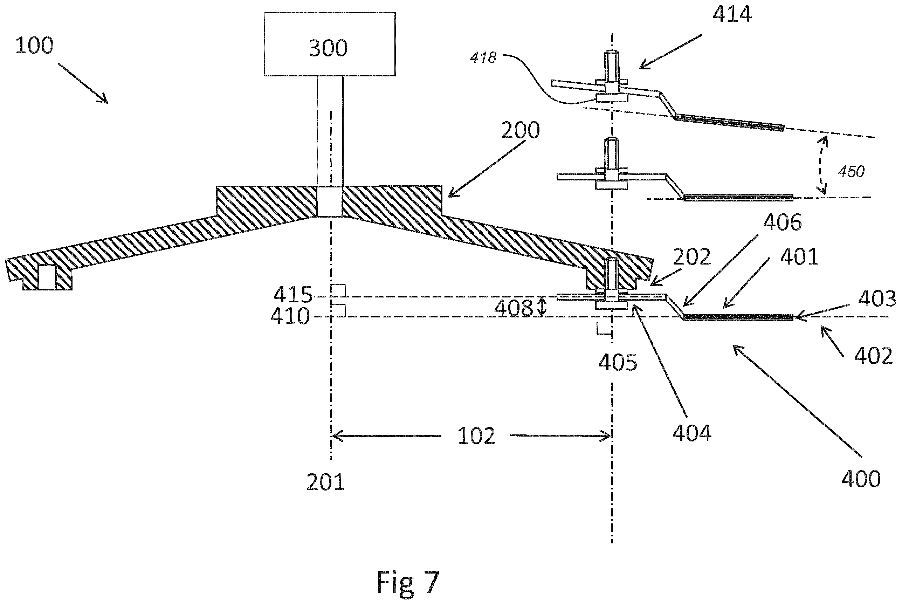

As is illustrated in Fig. 7 an axial play in the engagement between the blade carrier interface 404 and the blade attachment interface 202, defined by an axial distance between the head of the blade attachment screw 418 and the blade carrier 200 exceeding the thickness of the washer 411 and the sheet material of the cutting blade 400, allows tilting the blade 400 somewhat about a blade tilt axis extending through the blade carrier interface 404 in the direction of travel of the blade carrier interface 404 during rotation of the blade carrier 200, i.e. in a tangential direction relative to the blade carrier rotation axis 201. The tilt play 450 thus obtained may, for example, allow a tilt angle of between -5 degrees and +5 degrees relative to a horizontal plane. Upon rotation about the blade carrier rotation axis 201, the cutting blade 400 will, in response to centrifugal forces acting thereupon, automatically assume a tilt position suitable for cutting.

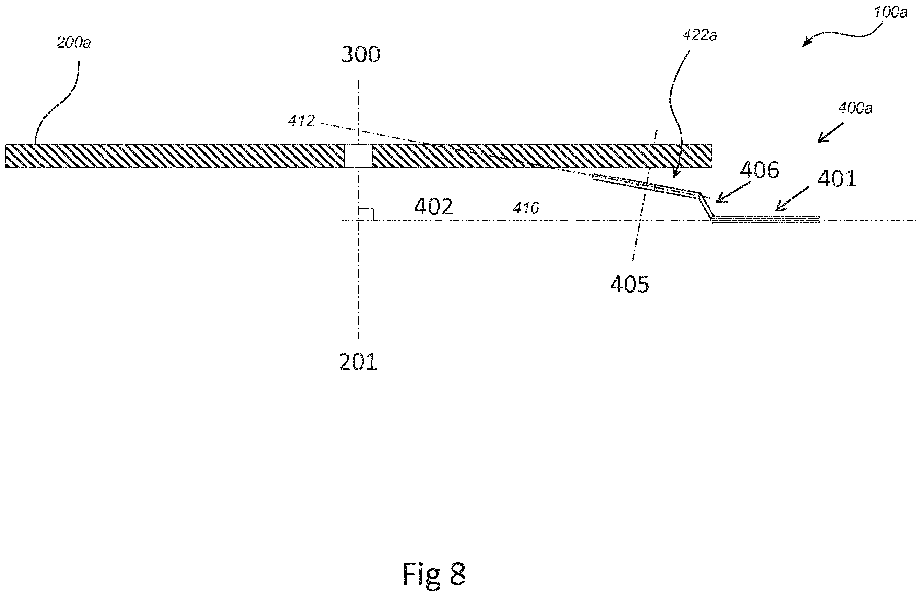

Fig. 8 schematically illustrates an alternative embodiment of a robotic lawnmower cutting arrangement 100a. The robotic lawnmower cutting arrangement 100a comprises a flat blade carrier disc 200, on which a cutting blade 400a is suspended in a non-illustrated manner. The cutting blade 400a is similar in most aspects to the cutting blade 400 described in detail hereinabove, but differs from the cutting blade 400 in that the blade carrier interface plane 412a is non-parallel to the blade carrier interface rotation plane 415 (Fig. 3) and the cutting portion plane 410, and the pivot axis 405 of the carrier interface is non-vertical. Still, the cutting plane 402 and the cutting portion plane 410 coincide, and are horizontal. Thanks to the blade pivot axis 405 being inclined radially outwards, when hitting an uncuttable object, the cutting blade 400a may pivot about the pivot axis 405 to a raised position, higher above the ground. The inclination is oriented such that the blade pivot axis 405 lies in the same plane as the blade carrier rotation axis 201. When the blade carrier 200 is rotated about the blade carrier rotation axis 201, the path of the blade pivot axis 405 defines a cone having its apex pointing downwards.

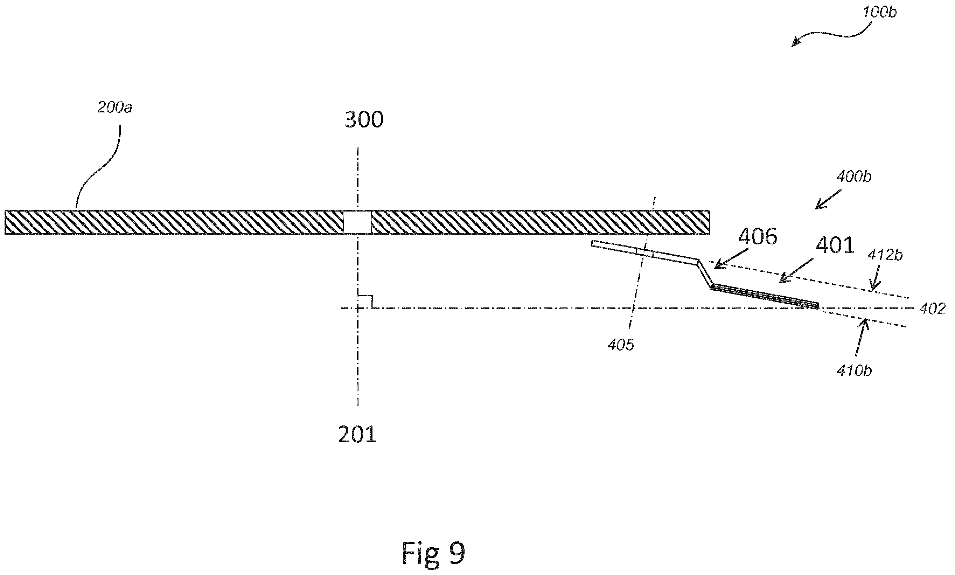

Fig. 9 schematically illustrates yet an alternative embodiment of a robotic lawnmower cutting arrangement 100b. The robotic lawnmower cutting arrangement 100b is similar in most aspects to the robotic lawnmower cutting arrangement 100a described with reference to Fig. 8, but differs from the robotic lawnmower cutting arrangement 100a of Fig. 8 in that the carrier interface plane 412b is parallel to the cutting portion plane 410b, and both planes are inclined relative to a horizontal plane. Still, the carrier disc rotation axis 201 is vertical such that the cutting plane 402, i.e. the plane along which the grass tips are being cut, defined by the circle followed by the lowermost ends of the cutting edges of the cutting blades 400, is horizontal. The cutting portion plane 410b is inclined relative to the cutting plane 402, as seen in the illustrated vertical section comprising the blade carrier rotation axis 201 and the blade carrier interface.

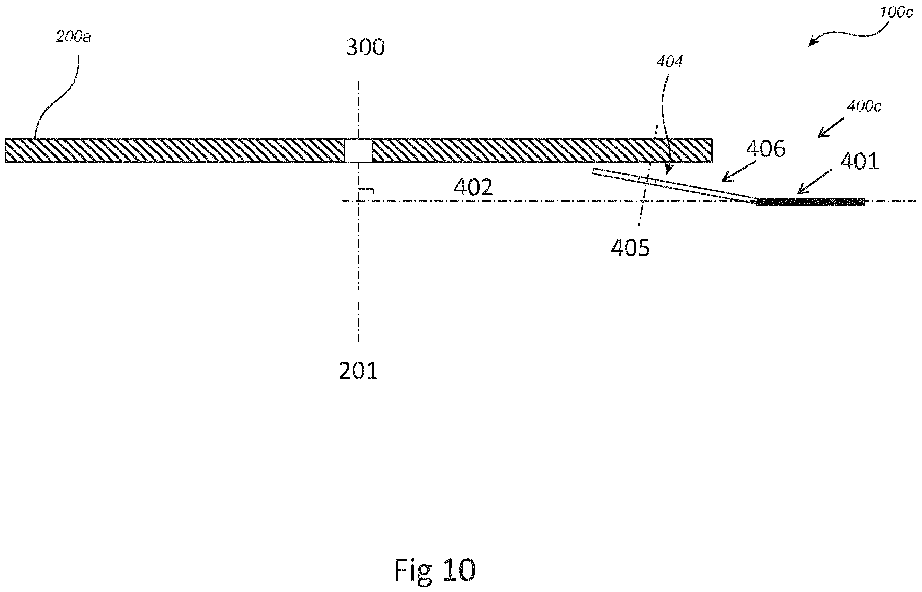

Fig 10 illustrates still another alternative embodiment of a robotic lawnmower cutting arrangement 100c. The robotic lawnmower cutting arrangement 100c is similar in most aspects to the robotic lawnmower cutting arrangement 100a described with reference to Fig. 8, but differs from the robotic lawnmower cutting arrangement 100a of Fig. 8 in that the carrier interface 404 extends along a carrier interface plane 412c which coincides with the offset portion 406.

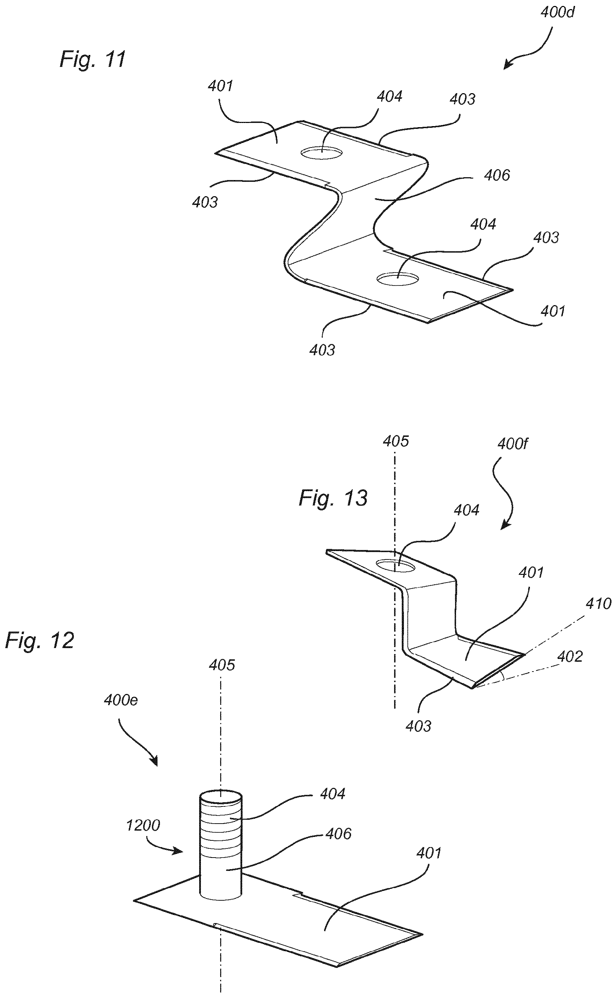

Fig 11 illustrates still another alternative embodiment of a robotic lawnmower cutting blade 400d. The cutting blade 400d is provided with two blade carrier interfaces 404 and two cutting portions 201, and is functionally symmetric about its offset portion 406, such that it can be attached to the blade carrier 200 (Fig. 3) at either end.

Fig 12 illustrates still another alternative embodiment of a robotic lawnmower cutting blade 400e. The cutting blade 400e is integrally formed with a threaded rod 1200, which doubles as both offset portion 406 and blade carrier interface 404, as well as defines the blade pivot axis 405.

Fig. 13 illustrates still another alternative embodiment of a robotic lawnmower cutting blade 400f, which has its cutting portion plane 410 inclined relative to the cutting plane 402, as seen in a radial direction from the blade pivot axis 405.

Thanks to the ability of reaching very close to the ground with high precision and low friction, the methods and devices herein are suitable for cutting very short grass, in applications such as golf court fairways and golf court greens.

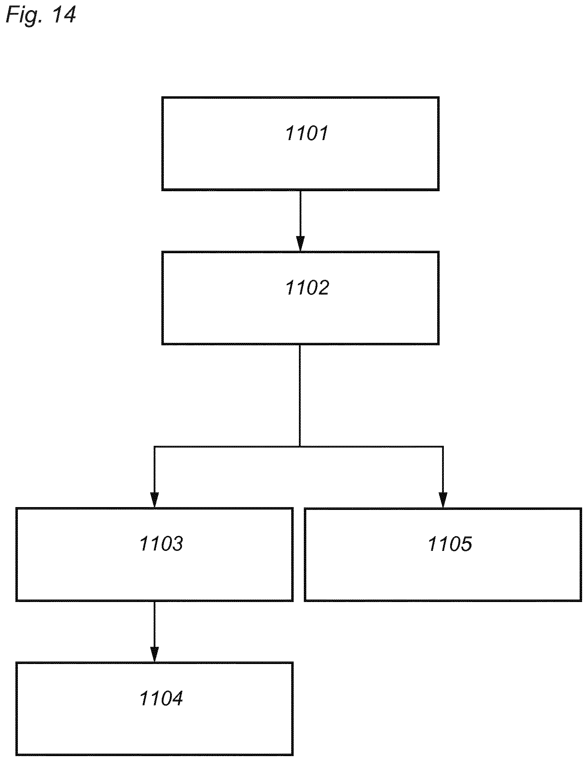

The cutting blade described above may be produced following a production method illustrated in the flow chart of Fig. 14, the method comprising the steps
1101: providing a sheet metal blank;
1102: bending the sheet metal blank to form a substantially flat cutting portion 401 (Fig. 4B), a substantially flat blade carrier interface portion 420, and an offset portion 406 separating the cutting portion 401 from the blade carrier interface portion 420 in a direction transversal to the plane of the cutting portion;
1103: grinding a cutting edge 403; and
1104: after grinding the cutting edge, locally treating the cutting edge to change the material properties thereof, for example to change its hardness.

In an alternative embodiment, steps 1103 and 1104 may be replaced by the step 1105: attaching a cutting edge 403 to the cutting portion 401. Also, the order of steps 1102 and 1105 may be reversed.

The invention has mainly been described above with reference to a few embodiments. However, as is readily appreciated by a person skilled in the art, other embodiments than the ones disclosed above are equally possible within the scope of the invention, as defined by the appended patent claims. For example, a vertical a blade carrier rotation axis has been illustrated. However, also a robotic lawnmower cutting arrangement having a blade carrier rotation axis which is tilted relative to a vertical axis may benefit from the teachings disclosed herein. Hence, even though less preferred for cutting very short grass, such an arrangement is also intended to be within the scope of the claims. Similarly, a blade carrier without any free-rotating lower protection plate, such as that of EP0808096 B1, has been illustrated. However, also a robotic lawnmower cutting arrangement having a free-rotating lower protection plate may benefit from the teachings disclosed herein. Hence, even though less preferred for cutting very short grass, such an arrangement is also intended to be within the scope of the claims. In the claims, the word "comprising" does not exclude other elements or steps, and the indefinite article "a" or "an" does not exclude a plurality.

## Claims

1. A robotic lawnmower cutting arrangement (100; 100a; 100c) comprising
a blade carrier (200; 200a) configured to be rotated by a cutting motor (300) about a blade carrier rotation axis (201), the blade carrier extending radially away from the blade carrier rotation axis (201) and comprising a blade attachment interface (202) radially offset from the blade carrier rotation axis (201), the blade attachment interface (202) being configured to pivotally hold a cutting blade (400; 400a; 400c; 400d; 400e); and
a cutting blade (400; 400a; 400c; 400d; 400e) comprising a substantially flat cutting portion (401) provided with a cutting edge (403), and a blade carrier interface (404) pivotally connected to the blade attachment interface (202) of the blade carrier (200; 200a), the pivotal connection thereby allowing the cutting blade (400; 400a; 400c; 400d; 400e) to pivot relative to the blade carrier (200; 200a) about a blade pivot axis (405) offset from the blade carrier rotation axis (201) such that, when the blade carrier (200; 200a) is rotated about the blade carrier rotation axis (201), the blade carrier interface (404) of the cutting blade (400; 400a; 400c; 400d; 400e) follows a circular path in a blade carrier interface rotation plane (415) perpendicular to the blade carrier rotation axis (201), and the cutting portion (401) follows a circular path in a cutting plane (402),
**characterized in that** the cutting edge extends within the cutting plane, and the cutting plane (402) is axially, with respect to the carrier rotation axis (201), offset from the blade carrier interface rotation plane (415) by a cutting plane offset distance (408).

2. The robotic lawnmower cutting arrangement (100; 100a; 100c) according to claim 1, wherein the cutting plane offset distance (408) exceeds 5 mm.

3. The robotic lawnmower cutting arrangement (100; 100a; 100c) according to any of the preceding claims, wherein the cutting blade (400; 400a; 400c; 400d; 400e) further comprises an offset portion (406) interconnecting the cutting portion (401) and the blade carrier interface (404) and extending in a direction transversal to the cutting portion plane (410), such that the cutting portion plane (410) is axially, with respect to the carrier rotation axis, offset from the blade carrier interface.

4. The robotic lawnmower cutting arrangement (100; 100a; 100c) according to any of the preceding claims, wherein the pivotal connection between the blade carrier interface (404) of the cutting blade (400; 400a; 400c; 400d; 400e) and the blade attachment interface (202) of the blade carrier (200; 200a) is configured to allow free pivoting of the cutting blade (400; 400a; 400c; 400d; 400e) about the blade pivot axis (405).

5. The robotic lawnmower cutting arrangement (100; 100a; 100c) according to any of the preceding claims, wherein the blade carrier interface (404) is integrally formed with the cutting portion (401).

6. The robotic lawnmower cutting arrangement (100) according to any of the preceding claims, wherein the cutting blade is integrally formed of a sheet material.

7. The robotic lawnmower cutting arrangement (100; 100a; 100c) according to claim 6, wherein a maximum thickness (407) of the sheet material of the cutting portion is less than 2 mm, for example less than 1.25 mm.

8. The robotic lawnmower cutting arrangement (100) according to any of the preceding claims, wherein the blade carrier interface (404) is made of a sheet material extending in a blade carrier interface plane (412), wherein the blade carrier interface plane (412) is substantially parallel to at least one of a cutting plane (402) and a cutting portion plane (410).

9. The robotic lawnmower cutting arrangement (100; 100a; 100c) according to any of the preceding claims, wherein the cutting blade (400; 400a; 400c; 400d; 400e) is detachably connected to the blade carrier (200; 200a).

10. The robotic lawnmower cutting arrangement (100; 100a; 100c) according to any of the preceding claims, wherein the engagement between the blade carrier interface (404) and the blade attachment interface (202) has a radial play, with respect to the blade pivot axis (405), of at least 5 mm.

11. The robotic lawnmower cutting arrangement (100; 100a; 100c) according to any of the preceding claims, wherein the engagement between the blade carrier interface (404) and the blade attachment interface (202) allows tilting the blade (400) about a blade tilt axis extending through the blade attachment interface (202) in the direction of travel of the blade attachment interface (202) during rotation of the blade carrier (200; 200a), i.e. in a tangential direction with respect to the blade carrier rotation axis (201).

12. The robotic lawnmower cutting arrangement (100; 100a; 100c) according to any of the preceding claims, wherein the cutting edge (403) is substantially straight.

13. The robotic lawnmower cutting arrangement (100; 100a; 100c) according to any of the preceding claims, wherein the cutting blade (400) is elongate and has a cutting blade length (L1) along its direction of elongation, wherein the cutting portion (401) has a cutting portion length (L2) along said direction of elongation of at least 20% of the cutting blade length (L1).

14. The robotic lawnmower cutting arrangement (100) according to any of the preceding claims, wherein the blade carrier interface (404) comprises a through-hole having an elongate shape along a plane perpendicular to the blade pivot axis (405).

15. The robotic lawnmower cutting arrangement (100; 100a; 100c) according to any of the preceding claims, wherein the cutting blade extends between a proximal end (422), which is provided with said blade carrier interface (404), and a distal end (424), which is provided with said cutting portion (401).

## Patentansprüche

1. Schneidanordnung (100; 100a; 100c) für einen Roboter-Rasenmäher, umfassend
einen Klingenträger (200; 200a), der konfiguriert ist, um durch einen Schneidmotor (300) um eine Klingenträgerdrehachse (201) gedreht zu werden, wobei sich der Klingenträger radial von der Klingenträgerdrehachse (201) weg erstreckt und umfassend eine Klingenbefestigungsschnittstelle (202), die radial von der Klingenträgerdrehachse (201) versetzt ist, wobei die Klingenbefestigungsschnittstelle (202) konfiguriert ist, um eine Schneidklinge (400; 400a; 400c; 400d; 400e) schwenkbar zu halten; und
eine Schneidklinge (400; 400a; 400c; 400d; 400e), umfassend einen im Wesentlichen flachen Schneidabschnitt (401), der mit einer Schneidkante (403) versehen ist, und eine Klingenträgerschnittstelle (404), die schwenkbar mit der Klingenbefestigungsschnittstelle (202) des Klingenträgers (200; 200a) verbunden ist, wobei die Schwenkverbindung dadurch der Schneidklinge (400; 400a; 400c; 400d; 400e) ermöglicht, relativ zu dem Klingenträger (200; 200a) um eine Klingenschwenkachse (405) zu schwenken, die von der Klingenträgerdrehachse (201) derart versetzt ist, dass, wenn der Klingenträger (200; 200a) um die Klingenträgerdrehachse (201) gedreht wird, die Klingenträgerschnittstelle (404) der Schneidklinge (400; 400a; 400c; 400d; 400e) einem kreisförmigen Weg in einer Klingenträgerschnittstellendrehebene (415), die senkrecht zu der Klingenträgerdrehachse (201) ist, folgt und der Schneidabschnitt (401) einem kreisförmigen Weg in einer Schneidebene (402) folgt,
**dadurch gekennzeichnet, dass** die Schneidkante sich innerhalb der Schneidebene erstreckt, und die Schneidebene (402) in Bezug auf die Trägerdrehachse (201) von der Klingenträgerschnittstellendrehebene (415) um einen Schneidebenenversatzabstand (408) axial versetzt ist.

2. Schneidanordnung (100; 100a; 100c) für einen Roboter-Rasenmäher nach Anspruch 1, wobei der Schneidebenenversatzabstand (408) 5 mm überschreitet.

3. Schneidanordnung (100; 100a; 100c) für einen Roboter-Rasenmäher nach einem der vorstehenden Ansprüche, wobei die Schneidklinge (400; 400a; 400c; 400d; 400e) ferner einen Versatzabschnitt (406) umfasst, der den Schneidabschnitt (401) und die Klingenträgerschnittstelle (404) miteinander verbindet und sich in einer Richtung quer zu der Schneidabschnittsebene (410) derart erstreckt, dass die Schneidabschnittsebene (410) in Bezug auf die Trägerdrehachse von der Klingenträgerschnittstelle axial versetzt ist.

4. Schneidanordnung (100; 100a; 100c) für einen Roboter-Rasenmäher nach einem der vorstehenden Ansprüche, wobei die Schwenkverbindung zwischen der Klingenträgerschnittstelle (404) der Schneidklinge (400; 400a; 400c; 400d; 400e) und der Klingenbefestigungsschnittstelle (202) des Klingenträgers (200; 200a) konfiguriert ist, um ein freies Schwenken der Schneidklinge (400; 400a; 400c; 400d; 400e) um die Klingenschwenkachse (405) zu ermöglichen.

5. Schneidanordnung (100; 100a; 100c) für einen Roboter-Rasenmäher nach einem der vorstehenden Ansprüche, wobei die Klingenträgerschnittstelle (404) einstückig mit dem Schneidabschnitt (401) ausgebildet ist.

6. Schneidanordnung (100) für einen Roboter-Rasenmäher nach einem der vorstehenden Ansprüche, wobei die Schneidklinge einstückig aus einem Blechmaterial ausgebildet ist.

7. Schneidanordnung (100; 100a; 100c) für einen Roboter-Rasenmäher nach Anspruch 6, wobei eine maximale Dicke (407) des Blechmaterials des Schneidabschnitts weniger als 2 mm, beispielsweise weniger als 1,25 mm beträgt.

8. Schneidanordnung (100) für einen Roboter-Rasenmäher nach einem der vorstehenden Ansprüche, wobei die Klingenträgerschnittstelle (404) aus einem Blechmaterial hergestellt ist, das sich in einer Klingenträgerschnittstellenebene (412) erstreckt, wobei die Klingenträgerschnittstellenebene (412) im Wesentlichen parallel zu mindestens einer Schneidebene (402) und einer Schneidabschnittsebene (410) verläuft.

9. Schneidanordnung (100; 100a; 100c) für einen Roboter-Rasenmäher nach einem der vorstehenden Ansprüche, wobei die Schneidklinge (400; 400a; 400c; 400d; 400e) abnehmbar mit dem Klingenträger (200; 200a) verbunden ist.

10. Schneidanordnung (100; 100a; 100c) für einen Roboter-Rasenmäher nach einem der vorstehenden Ansprüche, wobei der Eingriff zwischen der Klingenträgerschnittstelle (404) und der Klingenbefestigungsschnittstelle (202) ein radiales Spiel in Bezug auf die Klingenschwenkachse (405) von mindestens 5 mm aufweist.

11. Schneidanordnung (100; 100a; 100c) für einen Roboter-Rasenmäher nach einem der vorstehenden Ansprüche, wobei der Eingriff zwischen der Klingenträgerschnittstelle (404) und der Klingenbefestigungsschnittstelle (202) ein Neigen der Klinge (400) um eine Klingenneigungsachse ermöglicht, die sich durch die Klingenbefestigungsschnittstelle (202) in der Bewegungsrichtung der Klingenbefestigungsschnittstelle (202) während der Drehung des Klingenträgers (200; 200a) erstreckt, d. h. in einer tangentialen Richtung in Bezug auf die Klingenträgerdrehachse (201).

12. Schneidanordnung (100; 100a; 100c) für einen Roboter-Rasenmäher nach einem der vorstehenden Ansprüche, wobei die Schneidkante (403) im Wesentlichen gerade ist.

13. Schneidanordnung (100; 100a; 100c) für einen Roboter-Rasenmäher nach einem der vorstehenden Ansprüche, wobei die Schneidklinge (400) länglich ist und entlang seiner Verlängerungsrichtung eine Schneidklingenlänge (L1) aufweist, wobei der Schneidabschnitt (401) entlang dieser Verlängerungsrichtung eine Schneidabschnittslänge (L2) von mindestens 20 % der Schneidklingenlänge (L1) aufweist.

14. Schneidanordnung (100) für einen Roboter-Rasenmäher nach einem der vorstehenden Ansprüche, wobei die Klingenträgerschnittstelle (404) ein Durchgangsloch, das eine längliche Form entlang einer Ebene senkrecht zu der Klingenschwenkachse (405) aufweist, umfasst.

15. Schneidanordnung (100; 100a; 100c) für einen Roboter-Rasenmäher nach einem der vorstehenden Ansprüche, wobei sich die Schneidklinge zwischen einem proximalen Ende (422), das mit der Klingenträgerschnittstelle (404) versehen ist, und einem distalen Ende (424), das mit dem Schneidabschnitt (401) versehen ist, erstreckt.

## Revendications

1. Dispositif de coupe d'une tondeuse à gazon robotisée (100 ; 100a ; 100c) comprenant
un porte-lame (200 ; 200a) conçu pour être mis en rotation par un moteur de coupe (300) autour d'un axe de rotation de porte-lame (201), le porte-lame s'étendant radialement à l'écart de l'axe de rotation de porte-lame (201) et comprenant une interface de fixation de lame (202) radialement décalée par rapport à l'axe de rotation de porte-lame (201), l'interface de fixation de lame (202) étant conçue pour maintenir de manière pivotante une lame de coupe (400 ; 400a ; 400c ; 400d ; 400e) ; et
une lame de coupe (400 ; 400a ; 400c ; 400d ; 400e) comprenant une partie de coupe sensiblement plate (401) pourvue d'un bord de coupe (403), et une interface de porte-lame (404) reliée de manière pivotante à l'interface de fixation de lame (202) du porte-lame (200 ; 200a), la liaison pivot permettant ainsi à la lame de coupe (400 ; 400a ; 400c ; 400d ; 400e) de pivoter par rapport au porte-lame (200 ; 200a) autour d'un axe de pivotement de la lame (405) décalé par rapport à l'axe de rotation de porte-lame (201) de sorte que, lorsque le porte-lame (200 ; 200a) est tourné autour de l'axe de rotation de porte-lame (201), l'interface de porte-lame (404) de la lame de coupe (400 ; 400a ; 400c ; 400d ; 400e) suit une trajectoire circulaire dans un plan de rotation de l'interface de porte-lame (415) perpendiculaire à l'axe de rotation de porte-lame (201), et la partie de coupe (401) suit une trajectoire circulaire dans un plan de coupe (402),
**caractérisé en ce que** le bord de coupe s'étend à l'intérieur du plan de coupe et le plan de coupe (402) est décalé axialement, par rapport à l'axe de rotation de support (201), par rapport au plan de rotation de l'interface de porte-lame (415) par une distance de décalage de plan de coupe (408).

2. Dispositif de coupe de tondeuse à gazon robotisée (100 ; 100a ; 100c) selon la revendication 1, dans lequel la distance de décalage de plan de coupe (408) est supérieure à 5 mm.

3. Dispositif de coupe de tondeuse à gazon robotisée (100 ; 100a ; 100c) selon l'une quelconque des revendications précédentes, dans lequel la lame de coupe (400 ; 400a ; 400c ; 400d ; 400e) comprend en outre une partie décalée (406) reliant la partie de coupe (401) et l'interface de porte-lame (404) et s'étendant dans une direction transversale au plan de la partie de coupe (410), de sorte que le plan de la partie de coupe (410) est décalé axialement par rapport à l'axe de rotation de porte-lame, par rapport à l'interface de porte-lame.

4. Dispositif de coupe de tondeuse à gazon robotisée (100 ; 100a ; 100c) selon l'une quelconque des revendications précédentes, dans lequel la liaison pivot entre l'interface de porte-lame (404) de la lame de coupe (400 ; 400a ; 400c ; 400d ; 400e) et l'interface de fixation de lame (202) du porte-lame (200 ; 200a) est conçue pour permettre un pivotement libre de la lame de coupe (400 ; 400a ; 400c ; 400d ; 400e) autour de l'axe de pivotement de lame (405).

5. Dispositif de coupe de tondeuse à gazon robotisé (100 ; 100a ; 100c) selon l'une quelconque des revendications précédentes, dans lequel l'interface de porte-lame (404) est intégralement formée avec la partie de coupe (401).

6. Dispositif de coupe pour tondeuse à gazon robotisée (100) selon l'une des revendications précédentes, dans lequel la lame de coupe est intégralement formée d'un matériau en feuille.

7. Dispositif de coupe de tondeuse à gazon robotisée (100 ; 100a ; 100c) selon la revendication 6, dans lequel une épaisseur maximale (407) du matériau en feuille de la partie de coupe est inférieure à 2 mm, par exemple inférieure à 1,25 mm.

8. Dispositif de coupe de tondeuse à gazon robotisée (100) selon l'une quelconque des revendications précédentes, dans lequel l'interface de porte-lame (404) est constituée d'un matériau en feuille s'étendant dans un plan d'interface de porte-lame (412), dans lequel le plan d'interface de porte-lame (412) est sensiblement parallèle à au moins l'un parmi un plan de coupe (402) et un plan de partie de coupe (410).

9. Dispositif de coupe de tondeuse à gazon robotisée (100 ; 100a ; 100c) selon l'une quelconque des revendications précédentes, dans lequel la lame de coupe (400 ; 400a ; 400c ; 400d ; 400e) est reliée de manière amovible au porte-lame (200 ; 200a).

10. Dispositif de coupe de tondeuse à gazon robotisée (100 ; 100a ; 100c) selon l'une quelconque des revendications précédentes, dans lequel la mise en prise entre l'interface de porte-lame (404) et l'interface de fixation de lame (202) présente un jeu radial, par rapport à l'axe de pivotement de la lame (405), d'au moins 5 mm.

11. Dispositif de coupe de tondeuse à gazon robotisée (100 ; 100a ; 100c) selon l'une quelconque des revendications précédentes, dans lequel la mise en prise entre l'interface de porte-lame (404) et l'interface de fixation de lame (202) permet d'incliner la lame (400) autour d'un axe d'inclinaison de lame s'étendant à travers l'interface de fixation de lame (202) dans la direction de déplacement de l'interface de fixation de lame (202) au cours de la rotation du porte-lame (200 ; 200a), c'est-à-dire dans une direction tangentielle par rapport à l'axe de rotation de porte-lame (201).

12. Dispositif de coupe de tondeuse à gazon robotisée (100 ; 100a ; 100c) selon l'une quelconque des revendications précédentes, dans lequel le bord de coupe (403) est sensiblement droit.

13. Dispositif de coupe de tondeuse à gazon robotisée (100 ; 100a ; 100c) selon l'une quelconque des revendications précédentes, dans lequel la lame de coupe (400) est allongée et présente une longueur de lame de coupe (L1) le long de sa direction d'allongement, dans lequel la partie de coupe (401) présente une longueur de partie de coupe (L2) le long de ladite direction d'allongement d'au moins 20 % de la longueur de lame de coupe (L1).

14. Dispositif de coupe de la tondeuse à gazon robotisée (100) selon l'une quelconque des revendications précédentes, dans lequel l'interface de porte-lame (404) comprend un trou traversant ayant une forme allongée le long d'un plan perpendiculaire à l'axe de pivotement de la lame (405).

15. Dispositif de coupe de tondeuse à gazon robotisée (100 ; 100a ; 100c) selon l'une quelconque des revendications précédentes, dans lequel la lame de coupe s'étend entre une extrémité proximale (422), qui est pourvue de ladite interface de porte-lame (404), et une extrémité distale (424), qui est pourvue de ladite partie de coupe (401).
